# EUROPEAN PATENT APPLICATION

(11) **EP 1 607 062 A1**
(43) Date of publication of application: **21.12.2005**
(21) Application number: 05013003.8
(22) Date of filing: 16.06.2005
(51) Int. Cl.: A61C 1/10, A61C 1/12, A61C 1/18

(54) **Equipment for cutting and grinding teeth**

(30) Priority: 17.06.2004 JP 2004179228
(71) Applicant: Matsumoto Dental University, Nagano 399-0781 (JP)
(72) Inventor: Ito, Michio c/o Matsumoto Dental University, Shiojiri Nagano 399-0781 (JP)
(74) Representative: Vossius & Partner

(57) **Abstract**

For use in cutting and grinding a tooth by an attachment tool (11), equipment includes a head member (13) adapted to hold the attachment tool. The head member is connected to a rotating shaft (21) of a driving motor (23) through a rotation transmitting member (1B) having elasticity in a rotation direction of the rotating shaft (21). The head member is held a case member (15) so as to be rotatable around a predetermined axis (X) of the case member (15). The case member (15) is mechanically coupled to a driving motor (23).

## Description

This application claims priority to prior Japanese patent application JP 2004-179228, the disclosure of which is incorporated herein by reference.

This invention relates to tooth cutting and grinding equipment for cutting and grinding a tooth.

As one of dental equipment, a dental handpiece is widely used for dental treatment. For example, a dental micromotor handpiece for cutting a tooth upon dental treatment is disclosed in Japanese Unexamined Patent Application Publication (JP-A) No. 2002-143182. The dental micromotor handpiece comprises a head portion in which a chucking mechanism for removably holding a dental cutter is rotatably mounted, an angle portion removably connected to the head portion and containing a micromotor for rotating the chucking mechanism, and a grip case portion removably connected to the angle portion.

In the dental micromotor handpiece disclosed in the above-mentioned publication, each of the angle portion and the head portion has a long size and a large diameter.

Therefore, when the dental micromotor handpiece is inserted into an oral cavity of a patient to cut a tooth, a viewing field or sight of an operator may be restricted or blocked by the angle portion and the head portion. This results in an adverse effect upon the dental treatment and cure.

In particular, if the patient has a limited ability to open the mouth (known as "trismus" or disturbance of mouth opening), he can not widely or completely open the mouth. In this event, it is difficult to insert the angle portion and the head portion into the oral cavity so as to appropriately execute the dental treatment.

In case where the patient is a child, he may refuse to widely open the mouth upon the dental treatment. In this event, it is difficult to insert the angle portion and the head portion into the oral cavity so as to appropriately execute the dental treatment.

It is therefore an object of this invention to provide tooth cutting and grinding equipment which is capable of easily and appropriately executing dental treatment, such as cutting and grinding of a tooth, in an oral cavity.

It is another object of this invention to provide tooth cutting and grinding equipment which is capable of executing dental treatment, such as cutting or grinding of a tooth, with a tactile sense closest to that directly sensed at a fingertip of an operator.

According to this invention, there is provided an equipment for use in cutting and grinding a tooth by an attachment tool, said equipment comprising, a head member adapted to hold said attachment tool, a case member having a predetermined axis and holding said head member so as to be rotatable around said predetermined axis, a driving motor having a rotating shaft, a coupling member mechanically coupling said case member to said driving motor; and a rotation transmitting member connected between said head member and said rotating shaft, said rotation transmitting member having elasticity in a rotation direction of said rotating shaft.

### Brief Description of the Drawing:

Fig. 1 is a side view of tooth cutting and grinding equipment according to a first embodiment of this invention;
Fig. 2 is an enlarged side view of an end portion of the tooth cutting and grinding equipment illustrated in Fig. 1 when it is fixed to a finger;
Fig. 3 is an enlarged sectional view of a characteristic part of the tooth cutting and grinding equipment illustrated in Fig. 1;
Fig. 4 is a sectional view of tooth cutting and grinding equipment according to a second embodiment of this invention; and
Fig. 5 is a side view of tooth cutting and grinding equipment according to a third embodiment of this invention.

### Description of the Preferred Embodiments:

Now, this invention will be described in detail with reference to the drawing.

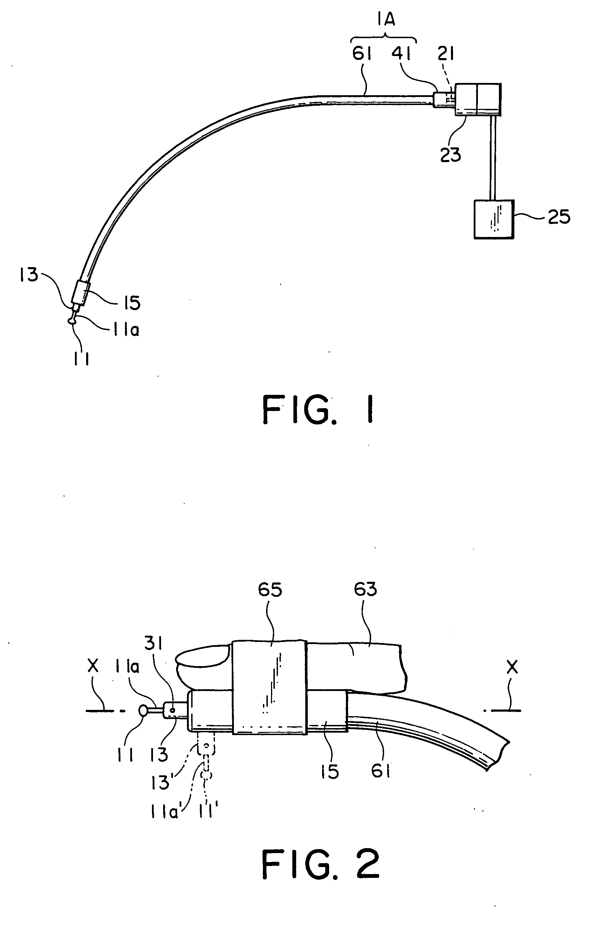

Referring to Figs. 1 through 3, tooth cutting and grinding equipment according to a first embodiment of this invention comprises an attachment tool 11, a head member 13 for removably fixing the attachment tool 11, a case member 15 having a predetermined axis X and holding the head member 13 so that the head member 13 is rotatable around the predetermined axis X, a driving motor 23 having a rotating shaft 21, a coupling member 1A mechanically coupling the case member 15 to the driving motor 23, a rotation transmitting member 1 B connected between the head member 13 and the rotating shaft 21, and a battery 25 for energizing the driving motor 23.

The attachment tool 11 comprises a rod-like part 11 a having an end portion for cutting or grinding a tooth. The rod-like part 11 a is engaged by a locking member 31 so that the attachment tool 11 and the head member 13 are rotated together. The locking member 13 is inserted from an outer peripheral surface of the head member 13 to the rod-like part 11 a and supports the attachment tool 11 so as to prevent the attachment tool 11 from being released from the head member 13.

The head member 13 has a cylindrical shape and has a long size along the predetermined axis X. The head member 13 has an insertion hole 13a formed on its end face at a longitudinal one end. An end portion of the rod-like part 11 a of the attachment tool 11 is removably inserted into the insertion hole 13a.

The case member 15 has a generally cylindrical shape. The head member 13 has a rear part inserted into the case member 15 from one end face of the case member 15 along the predetermined axis X. The coupling member 1A covers the rotation transmitting member 1 B located between the case member 15 and the driving motor 23.

The rotation transmitting member 1 B connects the head member 13 and the rotating shaft 21 with elasticity in a rotating direction in the manner that will later become clear. The rotation transmitting member 1 B comprises a first rotation mechanism 1C connected to the head member 13 and housed in the case member 15, a second rotation mechanism 2C connected to the rotating shaft 21, and an elastic member 17 connecting the first and the second rotation mechanisms 1C and 2C.

The first rotation mechanism 1C comprises a head holder 33 of a cylindrical shape rotatable around the predetermined axis X and a first axis member 35 held by or fixed to the elastic member 17 and engaged with the head holder 33 in a rotation direction of the head holder 33. The first axis member 35 extends along the predetermined axis X.

The elastic member 17 comprises a coil spring having opposite axial ends connected to the first and the second rotation mechanisms 1C and 2C, respectively. The coil spring has elasticity in the rotating direction as well known in the art. Therefore, the rotation transmitting member 1 B has the above-mentioned elasticity.

The case member 15 contains the head holder 33. The head holder 33 is integrally fixed to the rear part of the head member 13. The head member 13 and the head holder 33 are rotated around the predetermined axis X.

The head holder 33 has a head axis hole 33a extending from a rear end face thereof towards the head member 13 along the predetermined axis X. The case member 15 further contains an axis support portion 15b faced to the rear end face of the head holder 33.

The second rotation mechanism 2C comprises a shaft holder 51 rotatable around the predetermined axis X and connected to the rotating shaft 21, a second axis member 37 coupled to the shaft holder 51 and the elastic member 17, and a pin member 53 engaged with the second axis member 37 and the shaft holder 51 in the rotating direction.

The shaft holder 51 has a shaft hole 51 a formed on an axial one end face thereof to receive an end portion of the second axis member 37. The second axis member 37 extends through the interior of a sub case member 41 (which will later be described) and is inserted into the shaft hole 51 a. The end portion of the second axis member 37 inserted into the shaft hole 51 a of the shaft holder 51 is supported by a pin member 53. The pin member 53 is inserted from an outer peripheral surface of the shaft holder 51 to penetrate the second axis member 37. The shaft holder 51 has a rear end face connected to the rotating shaft 21.

The coupling member 1A comprises the sub case member 41 covering the second rotation mechanism 2C and connected to the driving motor 23, and a covering member 61 covering the elastic member 17 and connected between the case member 15 and the sub case member 41.

Each of the elastic member 17 and the covering member 61 has flexibility. The covering member 61 is a tubular member surrounding the elastic member 17. The elastic member 17 rotatably extends through the interior of the covering member 61.

The elastic member 17 has one end connected to the first axis member 35 and the other end connected to the second axis member 37.

The first axis member 35 has an end portion passing through the axis support portion 15b and inserted into the head axis hole 33a. An end portion of the first axis member 35 is provided with an external thread 35c formed on an outer peripheral surface thereof. On the other hand, the head axis hole 33a is provided with an internal thread (not shown) formed on an inner surface thereof. The external thread 35c of the first axis member 35 and the internal thread of the head axis hole 33a are coupled by screwing.

As the driving motor 23, a micromotor is used. When the driving motor 23 is energized by the battery 25, the rotating shaft 21 is rotated. At this time, the second rotation mechanism 2C is rotated together with the rotating shaft 21 so that the elastic member 17 is rotated. Simultaneously, the first rotation mechanism 1C is rotated following the rotation of the elastic member 17. Accordingly, a rotation torque is transmitted from the head holder 33 to the head member 13 so that the attachment tool 11 is rotated around the predetermined axis X to perform cutting or grinding of a tooth. Each of the elastic member 17 and the covering member 61 is freely bendable following the movement of the case member 15.

As a specific example of a wire material of the elastic member 17, use may be made of a metal or resin rod having flexibility, a strand-wire rod comprising a plurality of metal thin wires, or a strand-wire rod comprising a plurality of chemical fiber yarns or resin yarns.

Referring to Fig. 2, the case member 15 may be provided with a fixing member 65 for fixing a finger 63 of an operator to an outer surface of the case member 15 upon dental treatment.

For example, the fixing member 65 may comprise an adhesive tape. Most preferably, the fixing member 65 comprises a heat shrinkable tube. After a medical glove is fitted over a hand of the operator, the finger 63 is placed on the case member 15 and the heat shrinkable tube is wrapped around the case member 15 and the finger 63. Thereafter, the heat shrinkable tube is heated to be shrunk. As a result, the case member 15 and the finger 63 are fixed in tight contact with each other.

In the illustrated example, the finger 63 is placed on an upper side of the outer peripheral surface of the case member 15 and fixed to the case member 15 by the fixing member 65. However, depending on a treated region in an oral cavity of a patient, the finger 63 may be placed on a lower side of the outer peripheral surface of the case member 15 to be fixed to the case member 15 by the fixing member 65.

When the finger 63 of the operator is fixed to the case member 15 as mentioned above, the case member 15 is moved in cooperation with the movement of the finger 63. At this time, each of the elastic member 17 and the covering member 61 is freely movable following the movement of the finger 63.

Therefore, when the attachment tool 11 is inserted into the oral cavity of the patient to cut his tooth, it is possible to perform the dental treatment with a tactile sense closest to that directly sensed by a fingertip because the finger 63 of the operator is positioned in close proximity to the tooth as a treated region. Therefore, even if the view of the tooth as the treated region in the oral cavity is restricted or blocked, the operator can easily and appropriately treat the tooth without any trouble.

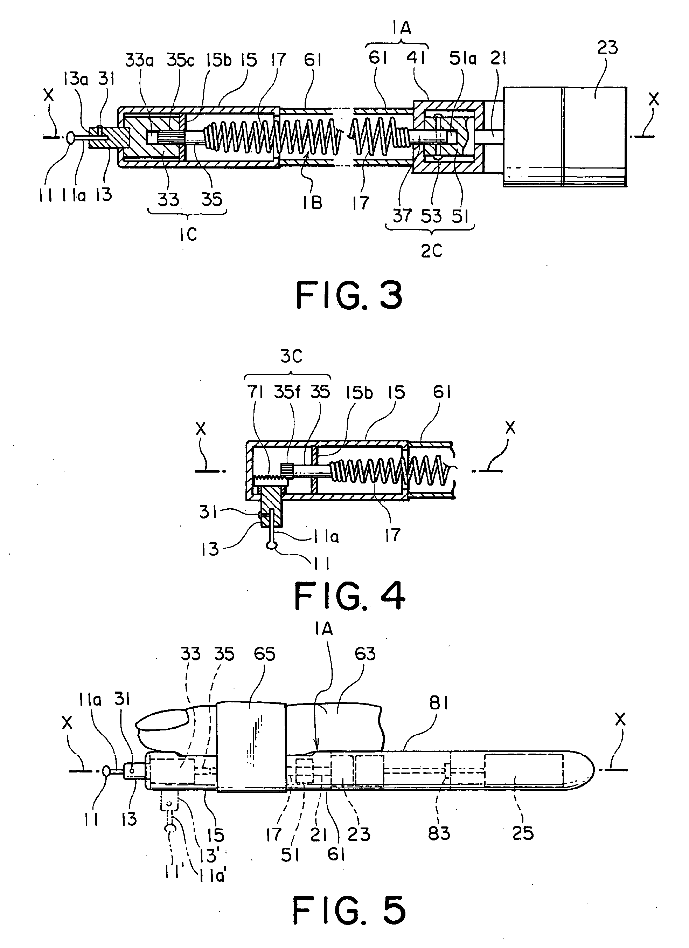

Referring to Fig. 4, tooth cutting and grinding equipment according to a second embodiment of this invention is similar in structure to the first embodiment except that the first and the second rotation mechanisms 1C and 2C mentioned above are replaced by an intersecting-axis face gear mechanism using well-known bevel gears. Similar parts are designated by like reference numerals and will not be described any longer.

In the second embodiment using the intersecting-axis face gear mechanism, a first rotation mechanism 3C is rotated by the rotation of the rotation transmitting member 17.

As illustrated in Fig. 4, the first rotation mechanism 3C comprises the first axis member 35, a first gear portion 71 fixed to a head member 13', and a second gear portion 35f engaged with the first gear portion 71 in the rotating direction.

The head member 13' extends along another axis intersecting the predetermined axis X.

More in detail, the head member 13' and an attachment tool 11' in Fig. 4 extend in a direction perpendicular to the predetermined axis X of the case member 15. A part of the head member 13' and the first gear portion 71 are disposed in the case member 15 to be rotatable. The second gear portion 35f is formed at the end portion of the first axis member 35. The first and the second gear portions 71 and 35f are engaged with each other to be perpendicular to each other.

When the first axis member 35 is rotated, a rotation torque is transmitted from the second gear portion 35f to the first gear portion 71 so that the head member 13' is rotated to perform cutting or grinding of a tooth.

When the tooth cutting and grinding equipment in this embodiment is fitted to the finger 63 of the operator, the attachment tool 11' having a rod-like part 11a' and the head member 13' are positioned to be perpendicular to the predetermined axis X as depicted by two-dot-and-dash lines in Fig. 2.

Referring to Fig. 5, tooth cutting and grinding equipment according to a third embodiment of this invention will be described as a variation of the first embodiment. Similar parts are designated by like reference numerals and will not be described any longer.

As illustrated in Fig. 5, the coupling member 1A is connected to an extended portion 81 extending from the sub case member 41 along the predetermined axis X. The extended portion 81 contains the driving motor 23, the battery 25, and an electrode terminal 83 connected to the battery 25.

The tooth cutting and grinding equipment illustrated in Fig. 5 has a pen-like shape extending long along the predetermined axis X. The finger 63 of the operator is kept in contact with the outer peripheral surface of the case member 15 and fixed to the case member 15 by the fixing member 65.

According to a fourth embodiment of this invention as a modification of the third embodiment, the first rotation mechanism 1C (Fig. 3) is replaced by the first rotation mechanism 3C (Fig. 4). In this case, the attachment tool 11' having the rod-like part 11a' and the head member 13' are positioned to be perpendicular to the predetermined axis X as depicted by two-dot-and-dash lines In Fig. 5.

As a further modification, the tooth cutting and grinding equipment may comprise a first rotation mechanism having the functions of both of the first rotation mechanisms 1C and 3C.

While the present invention has thus far been described in connection with the preferred embodiments thereof, it will readily be possible for those skilled in the art to put this invention into practice in various other manners.

## Claims

1. Equipment for use in cutting and grinding a tooth by an attachment tool (11, 11'), said equipment comprising:
a head member (13, 13') adapted to hold said attachment tool (11, 11');
a case member (15) having a predetermined axis (X) and holding said head member (13, 13') so as to be rotatable around said predetermined axis (X);
a driving motor (23) having a rotating shaft (21);
a coupling member (1A: 41, 61) mechanically coupling said case member (15) to said driving motor (23); and
a rotation transmitting member (1 B: 17, 33, 35, 37, 53, 51) connected between said head member (13, 13') and said rotating shaft (21), said rotation transmitting member (1 B) having elasticity in a rotation direction of said rotating shaft (21).

2. The equipment according to claim 1, wherein said rotation transmitting member (1 B) comprises;
a first rotation mechanism (1 C: 33, 35) contained in said case member (15) and connected to said head member (13);
a second rotation mechanism (2C: 37, 51, 53) connected to said rotating shaft (21); and
an elastic member (17) connected between said first and said second rotation mechanisms and having said elasticity.

3. The equipment according to claim 2, wherein said elastic member (17) comprises a coil spring (17) having axial ends which are connected to said first and said second rotation mechanisms (1C, 2C), respectively.

4. The equipment according to claim 2 or 3, wherein said first rotation mechanism (1C) comprises:
a head holder (33) rotatable around said predetermined axis (X) and connected to said head member (13); and
a first axis member (35) held by said elastic member (17) and engaged with said head holder (33) in said rotation direction.

5. The equipment according to claim 4, wherein said first axis member (35) extends along said predetermined axis (X).

6. The equipment according to claim 2 or 3, wherein said first rotation mechanism (3C: 35, 35f, 71) comprises:
a first axis member (35) held by said elastic member (17);
a first gear portion (71) fixed to said head member (13');
a second gear portion (35f) fixed to said first axis member (35) and engaged with said first gear portion (71) in said rotation direction.

7. The equipment according to claim 6, wherein said head member (13') extends along another axis intersecting said predetermined axis (X).

8. The equipment according to any of claims 2 to 7, wherein said second rotation mechanism (2C) comprises:
a shaft holder (51) connected to said rotating shaft (21) and rotatable around an axis of said rotating shaft (21);
a second axis member (37) coupled to said shaft holder (51) and said elastic member (17); and
a pin member (53) engaged with said second axis member (37) and said shaft holder (51) in said rotation direction.

9. The equipment according to any of claims 2 to 8, wherein said coupling member (1A) comprises:
a sub case member (41) connected to said driving motor (23) and covering said second rotation mechanism (2C); and
a covering member (61) connected between said case member and said sub case member and covering said elastic member (17).

10. The equipment according to claim 9, wherein each of said elastic member (17) and said covering member (61) has flexibility.

11. The equipment according to claim 10, wherein said covering member (61) has a cylindrical member surrounding said elastic member (17).

12. The equipment according to any of claims 1 to 11, further comprising an electrode connecting terminal (83) connected to a battery, said coupling member (1A) having an extended portion (81), each of said driving motor (23) and said electrode connecting terminal (83) being placed within said extended portion.

13. The equipment according to any of claims 1 to 12, further comprising a fixing member (65) attached to said case member (15) for surrounding a finger (63) of an operator together with said case member (15).
